# EUROPEAN PATENT SPECIFICATION

(11) **EP 3 723 331 B1**
(45) Date of publication and mention of the grant of the patent: **25.01.2023**
(21) Application number: 18895935.7
(22) Date of filing: 22.12.2018
(51) Int. Cl.: H04L 12/427

(54) **CHIP, AND RELATED APPARATUS**
CHIP UND ZUGEHÖRIGE VORRICHTUNG
PUCE, ET APPAREIL ASSOCIÉ

(30) Priority: 29.12.2017 CN 201711489892
(43) Date of publication of application: 14.10.2020
(73) Proprietor: Huawei Technologies Co., Ltd., Longgang District Shenzhen, Guangdong 518129 (CN)
(72) Inventor: ZHENG, Qiaoshi, Shenzhen, Guangdong 518129 (CN); WU, Xiaowen, Shenzhen, Guangdong 518129 (CN); XIA, Jing, Shenzhen, Guangdong 518129 (CN); ZONG, Wen, Shenzhen, Guangdong 518129 (CN)
(74) Representative: Goddar, Heinz J.
(86) International application number: PCT/CN2018/122954
(87) International publication number: WO 2019/128893

(56) References cited:
- EP-A1- 3 208 978
- CN-A- 103 124 420
- CN-A- 106 792 832
- US-A1- 2012 002 675
- US-A1- 2013 148 506
- US-A1- 2014 328 172
- US-A1- 2015 188 829

## Description

### TECHNICAL FIELD

The present invention relates to the field of network communications, and in particular, to a chip and a related device.

### BACKGROUND

As a feature size of a transistor continues to decrease, increasing functional modules are integrated into a single chip. An integrated chip typically uses a network on chip (NoC) to connect the increasing functional modules and is responsible for quick transfer of a variety of data between the modules. The NoC is a novel on-chip communications architecture designed for a multi-core system on chip (SoC). Nodes in an NoC and a network between the nodes are referred to as an On-Chip Network (OCN) for which a communication mode of a distributed computer system is referenced, and communication tasks are completed by using routing and packet switching technologies instead of conventional bus technologies.

A bufferless ring (BLR) network is a typical design of a bufferless NoC. In the bufferless ring network, all nodes constitute a ring main network path, and each node can be either a source node or a destination node. The bufferless ring network also includes a plurality of timeslots (slot for short) rotating around a transmission medium of the ring network. The slots can serve as carriers for storing and transmitting data, and move to a next node along the ring network in each clock cycle, to transfer a data packet from a source node to a destination node. For example, when data is being transmitted between the nodes by using a slot, the node can transmit data in a functional module to the slot, and can also transmit data in the slot to the functional module, thereby completing data exchange between different functional modules. No data packets are buffered between adjacent nodes in the bufferless ring network. Therefore, it is necessary to ensure that a data packet moves to a next node at each beat without a packet loss. To ensure that the data packet can move to a next level at each beat, a data packet on the main path needs to be transmitted preferentially. A new data packet to be injected from a node can be injected only when the main path has an empty slot. Before there is any empty slot on the main path, the data packet of the node cannot be injected, causing a bandwidth allocation imbalance in the bufferless ring network.

In the prior art, Intel patent US8289850B2 proposed a method and an apparatus for limiting an expected maximum bandwidth obtainable by a module. The apparatus provides a configurable time window and a threshold of a maximum quantity of data packets allowed to be sent within one window. If a quantity of data packets sent by the module reaches the threshold in one time window, a network injection port connected to the module is disabled, and therefore no more data packets of the module are injected into a network, so that another module has an opportunity to send a data packet to contend for a network bandwidth. After the time window ends, a next new time window commences. In this case, all network injection ports are enabled, and a quantity of data packets sent by the module is recalculated. The foregoing solution can ensure absolute bandwidth fairness between the nodes to some extent, but a bandwidth obtained by each node is relatively fixed once the bandwidth is configured. When a bandwidth requirement of the node changes in real time, it is possible that bandwidth allocation does not adapt to the change and bandwidth utilization is low.

EP 3 208 978 A1 discloses: A method for adjusting bandwidth in a communications network having a plurality of nodes connected over multiple links with a plurality of services running on the links includes detecting an impairment of a link wherein the impairment invokes a reduction in bandwidth available to the services running on the link, communicating information about the impairment to other nodes in the network and redistributing services between the links to limit a bandwidth required by services running on the impaired link to a value not exceeding the bandwidth available on the impaired link.

### SUMMARY

Embodiments of the present invention provide a chip and a related device, to resolve a prior-art problem of imbalanced and inflexible bandwidth allocation performed for nodes in a ring network.

According to a first aspect, an embodiment of the present invention provides a chip, where the chip may include: a plurality of functional modules and a ring network. The plurality of functional modules perform data exchange through the ring network, the ring network includes a plurality of nodes, and the plurality of functional modules send and receive data in the ring network by using the plurality of nodes. The plurality of nodes include a first node and a second node, where the first node and the second node are adjacent in the ring network. The first node is adapted to determine whether a first injection buffer value is greater than a first threshold and whether a first injection bandwidth is less than a first expected bandwidth. The first injection buffer value is a quantity of to-be-sent data packets of the first node, and the first injection bandwidth is a quantity of data packets successfully injected by the first node into the ring network in which the first node is located in one time window. When the first injection buffer value is greater than the first threshold and the first injection bandwidth is less than the first expected bandwidth, the first node is adapted to send a first request to the second node, where the first request is used to instruct at least one node in the ring network, other than the first node, to reduce a transmission quantity of first data packets, and the first data packet is a data packet that passes through the first node.

By using the chip provided in the first aspect, when bandwidth allocation performed for nodes in the ring network does not satisfy a requirement, allocation can be flexibly performed based on a priority or importance of the nodes, to balance the bandwidth allocation performed for the nodes in the ring network.

After receiving the first request, the second node determines whether a second injection bandwidth is greater than a second expected bandwidth, where the second injection bandwidth is a quantity of data packets successfully injected by the second node into the ring network in one time window; and if the second injection bandwidth is greater than the second expected bandwidth, the second node is adapted to reduce the transmission quantity of first data packets.

In a possible implementation, if the second injection bandwidth is less than or equal to the second expected bandwidth, the second node is adapted to forward the first request to a third node, making at least one node in the ring network, other than the first node and the second node, reduce the transmission quantity of first data packets, where the third node is a node in the ring network adjacent to the second node.

In a possible implementation, the second node is adapted to forward the first request to a third node, making at least one node in the ring network, other than the first node and the second node, reduce the transmission quantity of first data packets, where the third node is a node in the ring network adjacent to the second node.

In a possible implementation, that the second node is adapted to reduce the transmission quantity of first data packets includes: the second node is adapted to validate a second upper-limit bandwidth bound, where the second upper-limit bandwidth bound is used to restrict the quantity of data packets successfully injected by the second node into the ring network in one time window to a second upper-limit bandwidth, and the second upper-limit bandwidth is less than or equal to the second expected bandwidth.

In a possible implementation, the second node is adapted to determine whether a pass bandwidth exceeds a second threshold, where the pass bandwidth is a quantity of data packets passing through the second node in one time window. If the pass bandwidth exceeds the second threshold, the second node is adapted to forward the first request to a third node, making at least one node in the ring network, other than the first node and the second node, reduce the transmission quantity of first data packets, where the third node is a node in the ring network adjacent to the second node.

In a possible implementation, the first node is adapted to validate a first upper-limit bandwidth bound, where the first upper-limit bandwidth bound is used to restrict the quantity of data packets successfully injected by the first node into the ring network in one time window to a first upper-limit bandwidth, and the first upper-limit bandwidth is greater than or equal to the first expected bandwidth.

In a possible implementation, that the first node is adapted to validate a first upper-limit bandwidth bound includes: the first node is adapted to replace an initial upper-limit bandwidth of the first node with the first upper-limit bandwidth, and validate the first upper-limit bandwidth bound.

In a possible implementation, when the first node determines that a time period in which the first injection buffer value is equal to zero exceeds a preset time period, or when the first node determines that the first injection bandwidth is greater than the first expected bandwidth, the first node is adapted to send a second request to the second node, where the second request is used to instruct at least one node in the ring network, other than the first node, to increase the transmission quantity of first data packets.

In a possible implementation, the first node is adapted to determine that a time period in which the first injection buffer value is equal to zero exceeds a preset time period, or the first node is adapted to determine that the first injection bandwidth is greater than the first expected bandwidth, and the first node is adapted to invalidate the first upper-limit bandwidth bound.

In a possible implementation, the ring network is a bufferless ring BLR network.

In a possible implementation, the first expected bandwidth is a preset bandwidth value that matches a priority of the first node.

According to a second aspect, this application provides an electronic device, where the electronic device may include: a security element provided in any implementation of the first aspect and a discrete device coupled to the chip.

### BRIEF DESCRIPTION OF DRAWINGS

To describe the technical solutions in embodiments of the present invention or in the background more clearly, the following describes the accompanying drawings required for describing the embodiments of the present invention or the background.
FIG. 1 is a schematic diagram of a bufferless ring network architecture according to an embodiment of the present invention; and
FIG. 2 is a schematic structural diagram of a node according to an embodiment of the present invention.

### DESCRIPTION OF EMBODIMENTS

The following describes the embodiments of the present invention with reference to the accompanying drawings in the embodiments of the present invention.

In the specification, claims, and accompanying drawings of this application, the terms such as "first", "second", "third", and "fourth" are intended to distinguish between different objects but do not indicate a particular order. In addition, the terms "include", "have", and any other variants thereof, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in this specification means that a particular characteristic, structure, or feature described with reference to the embodiment may be included in at least one embodiment of this application. The phrases in various locations of this specification are unnecessarily corresponding to a same embodiment, and the embodiment is not an independent or optional embodiment exclusive from another embodiment. A person skilled in the art explicitly and implicitly understands that the embodiments described in this specification may be combined with another embodiment.

First, to-be-resolved technical problems and application scenarios in this application are further analyzed based on the technical disadvantages proposed in the background.

In the prior art, for a bandwidth allocation mode of a BLR, it can be considered that there are a restricted mode and a non-allocation mode. The restricted mode, as mentioned in the background, restricts an upper injection bandwidth limit of each node in the BLR in an initial case, that is, restricts a threshold of a maximum quantity of data packets successfully sent by a node in one time window. The non-allocation mode allows each node to freely contend for a network bandwidth, and in this mode, a system does not proactively adjust bandwidth allocation.

The restricted mode can ensure absolute fairness between nodes to some extent, but a difference between the nodes and a possible real-time changing bandwidth requirement are not considered in this mode. For example, a video module that processes video coding and decoding imposes a relatively high bandwidth requirement, and a module that is responsible for aggregation interruption imposes a relatively low requirement. Moreover, these modules may impose different bandwidth requirements in different time periods. For example, there may be a module that has a data burst in the system (for example, the video module), and the video module needs to occupy a high network bandwidth to send and receive a large amount of data in a time period, and only requires an extremely low network bandwidth for a small amount of data exchange in another time period. When the video module bursts, another module (for example, the module that is responsible for aggregation interruption) may be in a scenario in which there is no data exchange. If the restricted mode is used, the video module is forbidden from using an idle bandwidth of the module that is responsible for aggregation interruption. Eventually, a problem that actual bandwidth requirements of the nodes cannot be satisfied while overall network load is unsaturated is caused.

The non-allocation mode is based on a contention-based mechanism. When a bandwidth that can be provided by a network is far greater than required bandwidths of all modules, bandwidth requirements of all the modules can be satisfied, but the system bandwidth is apparently wasted. In a scenario in which the bandwidth that can be provided by the network cannot be far greater than the required bandwidths, a problem that the bandwidth requirements of the nodes cannot be controlled and imbalanced may be caused. For example, when a plurality of nodes in the network impose relatively large bandwidth requirements, because data transmitted on a main path in the BLR has an absolute priority, a bandwidth available to an edge node is far greater than a bandwidth obtained by an intermediate node. Consequently, there is a problem that the edge node can obtain the bandwidth through contention, and the intermediate node cannot obtain the bandwidth through contention. Eventually, a problem that actual bandwidth requirements of the nodes cannot be satisfied while overall network load is unsaturated is caused. In summary, the prior art mainly has the following disadvantages.
(1) From a perspective of static allocation, in the prior art, different requirements of different types of modules for a bus bandwidth are not distinguished.
(2) From a perspective of dynamic allocation, in the prior art, a bus status is not monitored in real time, and bandwidth allocation is not dynamically adjusted based on a real-time monitoring result.

Therefore, a to-be-resolved technical problem in this application is how to better control and flexibly allocate a bandwidth based on a real-time changing bandwidth requirement of each node on an on-chip network.

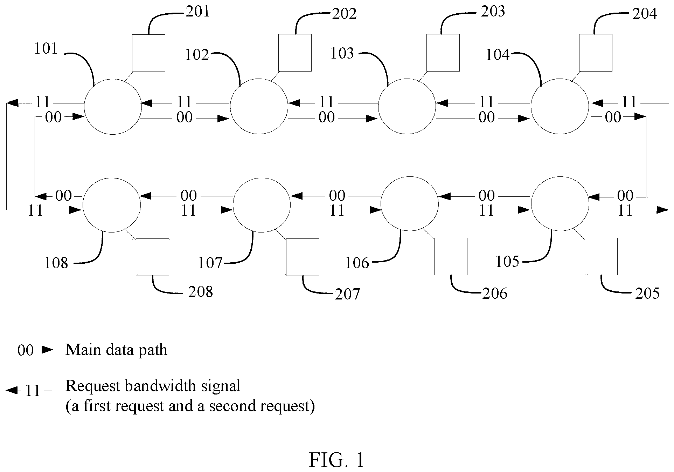

For easy understanding of the embodiments of the present invention, based on the foregoing descriptions, the following describes a network architecture to which the embodiments of the present invention are applied. FIG. 1 is a schematic diagram of a bufferless ring network architecture according to an embodiment of the present invention. Using a ring network as an example, a main path in the bufferless ring network includes a plurality of nodes, where the plurality of nodes are connected to form a circle, and each node is configured to connect to at least one functional module (such as an IP core). Eight nodes in FIG. 1 are used as an example (represented by circles in FIG. 1), including 101, 102, 103, 104, 105, 106, 107, and 108; and eight corresponding functional modules (represented by squares in FIG. 1) are used as an example, including 201, 202, 203, 204, 205, 206, 207, and 208. The foregoing external functional modules exchange data through nodes in the bufferless ring network. It can be understood that the foregoing nodes and corresponding modules are all located on one integrated circuit substrate, that is, on one chip.

A node, also known as a communications node or an interchange entity, is responsible for data forwarding and transfer. In the bufferless ring network, a slot is transferred between nodes in the ring network in a predetermined direction, and there is a slot on each node in the ring network at each moment. When data is being transmitted between the nodes by using a slot, the node can transmit data in a functional module to the slot, and can also transmit data in the slot to the functional module. In this application, data sending or receiving is performed between the nodes through a main data path 00. For example, when a functional module 201 needs to send data to a functional module 204, the functional module 201 transmits the data in a direction of the main path in the bufferless ring network, starting from a source node 101 or passing through an empty slot and a node 102, passing through a node 103, and reaching a destination node 104; and finally transfers the data in the slot to the functional module 204. So far, the data transmission between the functional modules is completed in the bufferless ring network. Each node in this application needs to forward and transfer data in the direction of the main path, and also needs to feed back a request signal for a bandwidth requirement, but a transfer direction of the request signal is opposite to the direction of the main path. Therefore, in this application, physical lines 11 that may be used for transmitting a signal whose transfer direction is opposite to the direction of the main path need to be configured between the nodes in the bufferless ring network. In this way, the node can feed back a request bandwidth signal (such as a first request and a second request in this application) to its previous-level node. It can be understood that data sending and receiving between the nodes in this application is essentially data sending and receiving between the functional modules corresponding to the nodes, and transfer between the nodes is performed by using an empty slot. For ease of description, data sending between nodes is directly used as an example in the following related description.

A functional module, such as an IP core or a CPU core, can also be referred to as a computing node (resource), and is configured to complete computation tasks in a broad sense. The functional module may be either a SoC or one of various IPs with a single function. The functional module may also include devices that are responsible for providing required data for calculation, such as a double data rate synchronous dynamic random-access memory (DDR), a high speed serial computer extended bus standard PCIE device, and a last-level-cache (LLC) device.

It can be understood that the network architecture in FIG. 1 is only an example implementation in this embodiment of the present invention. The network architecture in this embodiment of the present invention includes but is not limited to the bufferless ring network architecture. It should be understood that this embodiment of the present invention can also be applied to all networks built based on a ring network, such as a 2D-mesh network and a 3D-mesh network that are built based on a BLR.

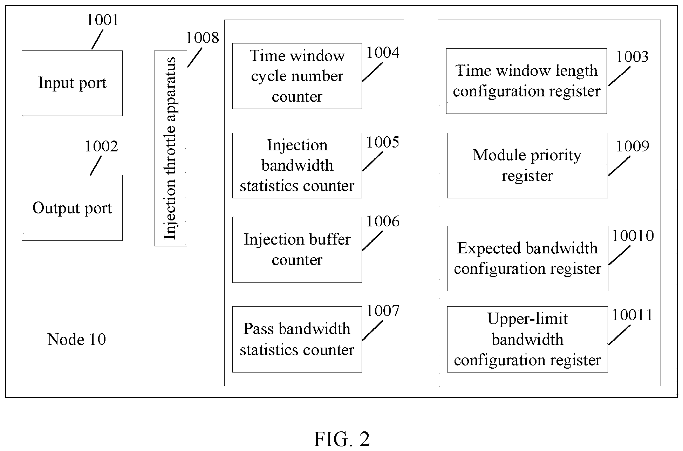

As a further implementation of the nodes in FIG. 1, FIG. 2 is a schematic structural diagram of a node according to an embodiment of the present invention. A node 10 is any node in the bufferless ring network provided in FIG. 1 in this application. The node 10 may include an input port 1001, an output port 1002, a time window length configuration register 1003, a time window cycle number counter 1004, an injection bandwidth statistics counter 1005, and an injection buffer counter 1006. Optionally, a pass bandwidth statistics module 1007, an injection throttle apparatus 1008, a module priority register 1009, and an upper-limit bandwidth configuration register 10011 may further be included.

For an input port 1001/an output port 1002, connections between each node (such as 103 in FIG. 1), an adjacent node (such as 102 in FIG. 1), and a functional module (such as 203 in FIG. 1) are completed by the input port and the output port. In the bufferless ring network, there is no virtual channel and buffer between input ports or output ports. When data needs to be sent from a source node to a destination node, whether a slot coming from a previous-level node is empty needs to be determined. If the slot is empty, the data is placed into the slot and then the slot is transmitted to an adjacent next-level node. If the slot is not empty, the data cannot be sent to a next node, and because there is no buffer between switching nodes, the data can only be temporarily stored in an injection buffer module until a next empty slot arrives.

A configuration value of the time window length configuration register 1003 indicates a quantity of clock cycles in one time window, and is a static configuration value. For example, one time window can be configured as 10000 clock cycles.

The time window cycle number counter 1004 counts a quantity of clock cycles that a current time window has elapsed. 1 is added to a count value of the counter 1004 each time one clock cycle ends. When the count value of the counter 1004 is equal to the configuration value of the time window length configuration register 1003, the count value is set to 0, indicating that the current time window ends and a next time window commences.

For the injection bandwidth statistics counter 1005, each time a node successfully injects a data packet into the network within one time window, 1 is added to a value of the counter 1005. When a time window ends, the value of the counter 1005 is set to 0. The counter 1005 has counted a network bandwidth obtained by the node in the current time window.

The injection buffer counter 1006 calculates a quantity of buffer data packets in one time window. When a quantity of to-be-sent data packets of a node increases by one, 1 is added to a value of the counter 1006. When a to-be-sent data packet is successfully injected into the network, 1 is subtracted from the value of the counter 1006. When a time window ends, the value of the counter 1006 is not set to 0.

For the pass bandwidth statistics counter 1007, in one time window, for any node, when a valid data packet passes through the main path in the ring network in each clock cycle, 1 is added to a value of the counter 1007. When a time window ends, the value of the counter 1007 is set to 0. The counter 1007 counts a network bandwidth occupied by an upstream module in the current time window.

The injection throttle apparatus 1008 can prevent a node from continuing to inject a data packet into the network under the control of an injection stopping condition, so that the node no longer obtains a network bandwidth. After the injection stopping condition is invalidated, the injection throttle apparatus stops working and does not interfere with injection of a data packet into the network by a node.

The module priority register 1009 is a configuration register in respect of a node characteristic. For example, priorities of nodes (that is, corresponding functional modules) may be divided into four levels: a high priority (HP), a middle priority (MP), a low priority (LP), and not starved (NS). It can be understood that a quantity of levels and a division rule of priorities may be determined based on an actual operating status of the system. This is not specifically limited in this application.

The expected bandwidth configuration register 10010 is a configuration register in respect of a network characteristic. For example, expected network bandwidths may also be divided into four levels: a high bandwidth (HB), a middle bandwidth (MB), a low bandwidth (LB), and a none bandwidth (NB). It can be understood that a quantity of levels and a division rule of expected bandwidths may be determined based on the actual operating status of the system. This is not specifically limited in this application.

The upper-limit bandwidth configuration register 10011 is a configuration register in respect of a network characteristic. For example, an upper-limit network bandwidth can match the expected bandwidth, and the upper bandwidth may be equal to the expected bandwidth or greater than the expected bandwidth. It can be understood that a value of the upper-limit bandwidth can specifically be set according to a priority of each node. This is not specifically limited in this application.

It can be understood that the node structure in this embodiment of the present invention includes but is not limited to the structure in FIG. 2. Any structure in which a chip in this application can be configured to perform bandwidth allocation shall fall within the protection scope and coverage of this application.

This application provides a chip based on the network architecture provided in FIG. 1 and the node structure provided in FIG. 2, so as to specifically analyze and resolve the technical problems proposed in this application. The chip 10 includes a plurality of functional modules and a ring network. For a specific form of the ring network, refer to the ring network provided in FIG. 1. The ring network may be a bufferless ring BLR network. The plurality of functional modules exchange data through the ring network, where the ring network includes a plurality of nodes. The plurality of functional modules send and receive data in the ring network by using the plurality of nodes, where the plurality of nodes include a first node (103 in FIG. 1 is used as an example for subsequent description) and a second node (102 in FIG. 1 is used as an example for subsequent description during unicasting, and 102, 104, 106 in FIG. 1 are used as an example for subsequent description during broadcasting), and the first node 103 and the second node 102 are adjacent in the ring network. Being adjacent means that there are no other nodes between two nodes in the ring network.

The first node 103 can determine whether a first injection buffer value is greater than a first threshold by using the injection buffer counter 1006 and determine whether a first injection bandwidth is less than a first expected bandwidth by using the injection bandwidth statistics counter 1005. The first injection buffer value is a quantity of current to-be-sent data packets of the first node 103, and the first injection bandwidth is a quantity of data packets successfully injected by the first node 103 into the ring network in which the first node 103 is located in one time window. When the first injection buffer value is greater than the first threshold and the first injection bandwidth is less than the first expected bandwidth, the first node 103 may send a first request to the second node 102 through the dedicated physical line 11 in FIG. 1, where the first request is used to instruct at least one node in the ring network, other than the first node 103, to reduce a transmission quantity of first data packets, and the first data packet is a data packet that passes through the first node 103. Optionally, the second node 102 is both an upstream node and an adjacent node of the first node 103.

It should be noted that the first data packet is the data packet that passes through the first node. To be specific, neither a source node nor a destination node of the first data packet is the first node, but the first node is a node, through which the first data packet passes, between the source node and the destination node.

With respect to the first injection bandwidth, it should be noted that because each of data packets in the ring network reaches a specific destination node from a specific source node, in terms of a single node in the entire ring network, an injection bandwidth of the node can be calculated by calculating a packet sent from the node. Because a data packet passing through the node is quite likely to start from another node (certainly there may be a small quantity of data packets starting from this node, but fail to RING the destination node and then go back after circling around), an injection bandwidth can be calculated on the corresponding starting node. Therefore, in this application, only the data packets starting from the nodes are uniformly calculated. In this way, all successfully injected data packets in the entire ring network are calculated only once, and repeated calculation is not performed. Moreover, because bandwidth control is performed on each node, only data that the node schedules to the ring network ring from an injection buffer "ingress buf" can be controlled. For the data packet sent from the another node and passing through the node, because the data packet has been sent, occupied a slot, and circulated in the ring network ring through the slot, a quantity of data packets cannot be reduced through adjustment. If the quantity of data packets passing through the node needs to be reduced, a quantity of data packets scheduled to the ring network can be reduced only by reducing sources of data packets, that is, source nodes. Therefore, in this application, each node first needs to monitor an injection bandwidth of the node (that is, a quantity of data packets successfully injected by the node into the ring network in which the node is located in one time window).

Based on the foregoing descriptions, the following analyzes how to determine whether a node needs to send a bandwidth request to another node in the ring network in this application. It is assumed that an injection buffer value of a node is large to some extent (which exceeds a given threshold), but an injection bandwidth of the node is relatively large (which is greater than a given threshold). In this case, that the node has no injection bandwidth to use is not caused by an excessively high injection bandwidth injected by another node, but caused by an excessive large quantity of to-be-inj ected data packets of the node. The reason is that a condition that the injection buffer value of the node exceeds the given threshold indicates that the injection bandwidth currently occupied by the node is high, and indirectly indicates that another node does not occupy an excessively high injection bandwidth. Therefore, the node initiating a bandwidth request cannot be responded at this time by releasing the injection bandwidth of the another node, and there is no need to send the first request in this case. However, when the injection buffer value is greater than the given threshold and the injection bandwidth is less than the given threshold, the first node may send the first request to mitigate an injection bandwidth pressure of the first node. The reason is that when the first node currently has a large quantity of data packets to be sent (the injection buffer value is greater than the first threshold), but the injection bandwidth is relatively low (the injection bandwidth is less than the first expected bandwidth), it only indicates that another node has a relatively high injection bandwidth (occupies a relatively large quantity of slots in one time window), resulting in an insufficient injection bandwidth (an empty slot in one time window) of the first node for data transmission. Therefore, when the foregoing condition is satisfied, the first node can obtain a higher injection bandwidth by initiating a request to the another node to reduce the transmission quantity of first data packets. For example, when both of the following conditions (1) and (2) are satisfied, the first node proactively sends the first request (a setting request bandwidth signal) to the second node.
(1) The ingress buf of the node has a large quantity of data packets to be sent.
(2) HP and MP modules can only obtain an LB and a bandwidth lower than the LB, or LP and NS modules can only obtain an NB and a bandwidth lower than the NB

It should be noted that due to unity of the direction of the main path in the ring network and a principle of transmitting data between nodes on a shortest path, for the first node, first data packets of the first node mainly come from an upstream node that is adjacent to the first node, namely, the second node. Therefore, in a process of sending the first request by the first node, in this application, the first request may be sent only to an upstream (a previous level) node, that is, the second node, or the first request may be broadcast to all nodes in the ring network.

Specific implementations of reducing a transmission quantity of first data packets by at least one node in the ring network after the second node receives the first request may include the following two cases:
Case 1: After receiving the first request, the second node 102 determines whether a second injection bandwidth of the second node 102 is greater than a second expected bandwidth, where the second injection bandwidth is a quantity of data packets successfully injected by the second node 102 into the ring network in one time window; and if the second injection bandwidth is greater than the second expected bandwidth, the second node 102 reduces the transmission quantity of first data packets.

Specifically, after receiving the first request, the second node first checks whether the currently obtained injection bandwidth is greater than the second expected bandwidth that matches the second node. If the second injection bandwidth is greater than the second expected bandwidth, it indicates that a quantity of slots currently occupied by the second node occupied exceeds the preset bandwidth value. Therefore, some slots can be released by reducing the quantity of first data packets sent by the second node, so that the first node can obtain a higher injection bandwidth.

Case 2: If the second injection bandwidth is less than or equal to the second expected bandwidth, the second node 102 forwards the first request to a third node, making at least one node in the BLR, other than the first node 103 and the second node 102, reduce the transmission quantity of first data packets, where the third node is an adjacent node of the second node 102 in the BLR. Optionally, the third node is both an upstream node and an adjacent node of the second node.

Specifically, after receiving the first request, if the second node determines that the second injection bandwidth is less than or equal to the second expected bandwidth, it indicates that the quantity of slots currently occupied by the second node does not exceed the preset bandwidth value, that is, the injection bandwidth of the another node is not occupied. Therefore, the node occupying the injection bandwidth of the first node may be a previous-level node of the second node. The second node forwards the first request to the adjacent third node through the physical line 11 in FIG. 1. By analogy, at least one node is finally found, and some slots can be released by reducing the quantity of first data packets sent by the node (the third node or a previous-level node of the third node), so that the first node can obtain a higher injection bandwidth.

Optionally, with reference to Case 1, the second node 102 may still forward the first request to a third node 101 when the transmission quantity of first data packets has been reduced, making at least one node, other than the first node 103 and the second node 102, reduce the transmission quantity of first data packets, so that the first node can obtain an injection bandwidth as high as possible.

It can be understood that each node in the ring network may restrict, in an initial case, a threshold of an injected bandwidth by using an upper-limit bandwidth configuration register 10011, and the threshold is the expected bandwidth in this application. In addition, an expected bandwidth setting rule requires that a total quantity of expected bandwidths of all nodes should not exceed a total bandwidth of the entire ring network.

In Case 1, a specific implementation of reducing the transmission quantity of first data packets by the second node 102 may be validating a second upper-limit bandwidth bound by the second node 102, where the second upper-limit bandwidth bound is used to restrict the quantity of data packets successfully injected by the second node 102 into the ring network in one time window to a second upper-limit bandwidth, and the second upper-limit bandwidth is less than or equal to the second expected bandwidth. The reason is that a quantity of first data packets sent by the second node 102 to the first node 103 needs to be reduced. Therefore, the injection bandwidth of the second node 102 may be restricted by validating the second upper-limit bandwidth bound of the second node, to release a part of the bandwidth to the first node 103 that needs a higher bandwidth. It can be understood that the upper-limit bandwidth of the second node 102 needs to be less than or equal to the expected bandwidth of the second node 102, otherwise, a bandwidth limitation function cannot be implemented.

For example, for the upper-limit bandwidth configuration register 10011 of software or a BIOS configuration node, a value of the register 10010 represents a maximum network injection bandwidth available to the node within one time window. When a bandwidth obtained by the node is equal to the expected bandwidth, the injection throttle apparatus 1008 is activated, so as to prevent the node from continuing to inject a data packet into the ring network to occupy a network bandwidth. When a next time window commences, the injection throttle apparatus 1008 is invalidated, so that a data packet can be injected into the network by the node, and the injection bandwidth of the node starts to be recalculated. In this mechanism, a maximum quantity of data packets that a node can inject into the network in one time window is restricted, thereby restricting the maximum network bandwidth occupied by the node.

In a possible implementation, after receiving the first request sent by the first node, the second node 102 determines whether a pass bandwidth exceeds a second threshold, where the pass bandwidth is a quantity of data packets passing through the second node 102 in one time window. If the pass bandwidth of the second node exceeds the second threshold, the second node 102 forwards the first request to the third node 101, making at least one node, other than the first node 103 and the second node 102 in the ring network, reduce the transmission quantity of first data packets. The pass bandwidth of the second node 102 indicates a data packet that is definitely to arrive at or that passes through the first node 103, and therefore the data packet corresponding to the pass bandwidth is sent from an upstream node other than the second node 102. The destination node includes the data packet of the first node, but other data packets affect the injection bandwidth of the first node. Therefore, the second node forwards the first request to the third node, so that the upstream node of the second node reduces the transmission quantity of first data packets.

Optionally, in this application, when the injection bandwidth of the first node is relatively small and insufficient, the first request may be sent to another node in the ring, and an upper bandwidth limit of the first node may be set. For example, the first node 103 validates a first upper-limit bandwidth bound, where the first upper-limit bandwidth bound is used to restrict the quantity of data packets successfully injected by the first node 103 into the ring network in one time window to a first upper-limit bandwidth. It can be understood that the first upper-limit bandwidth is greater than or equal to the first expected bandwidth, so that the first node 103 does not excessively occupy an injection bandwidth of the other node on the premise of ensuring that the first node 103 can obtain a relatively high injection bandwidth, thereby improving bandwidth utilization of the entire ring network.

In a possible implementation, a specific manner of validating the first upper-limit bandwidth bound by the first node 103 may be: The first node 103 replaces an initial upper-limit bandwidth of the first node 103 with the first upper-limit bandwidth, and validates the first upper-limit bandwidth bound. To be specific, each node may set an initial upper-limit value (for example, the initial upper-limit value of the first node is the corresponding first expected bandwidth), and then uses another upper-limit value (for example, an upper limit of the first node is the first upper-limit bandwidth) when finding that the injection bandwidth is quite insufficient. For example, if a node has a high initial priority, an initial upper injection bandwidth limit of the node may be higher than that of another node, and then when finding that the injection bandwidth is insufficient, a higher upper limit may be validated to ensure that the node with a high priority can obtain a higher injection bandwidth.

The foregoing describes a solution for a problem that the insufficient bandwidth of first node is caused by excessively high injection bandwidth of another node in the ring network. Further, when the first node obtains a bandwidth released by another node in the ring network, due to a real-time change of a data volume of a node, when the required injection bandwidth of the first node decreases, the obtained injection bandwidth may be released to the another node in this application. In a possible implementation, when the first node 103 determines that a time period in which the first injection buffer value is equal to zero exceeds a preset time period, or when the first node 103 determines that the first injection bandwidth is greater than the first expected bandwidth, the first node 103 sends a second request to the second node 102, where the second request is used to instruct at least one node in the ring network, other than the first node 103, to increase the transmission quantity of first data packets. To be specific, when the first node 103 finds that the quantity of current to-be-sent data packets is greatly reduced (that is, the injection buffer is empty for a long time), or when there are many data packets to be sent but the currently obtained injection bandwidth is quite large (which has exceeded the maximum value that the system can provide), the first node 103 needs to send the second request to the second node. For example, when any one of the following conditions (1) and (2) is satisfied, the first node block proactively sends the second request (a clearing request bandwidth signal):
(1) The injection buffer "ingress buf" of the node has no data packet to be sent for a long time.
(2) The HP and MP nodes have obtained an MB and a bandwidth higher than MB, or the LP and NS nodes have obtained an LB and a bandwidth higher than LB.

Optionally, the first node may send the second request to the second node in the ring network, so that an injection bandwidth of another node in the ring network can be appropriately increased. In addition, the first node may further adjust the upper injection bandwidth limit of the first node. In a possible implementation, the first node 103 determines that the time period in which the first injection buffer value is equal to zero exceeds the preset time period, or the first node 103 determines that the first injection bandwidth is greater than the first expected bandwidth, the first node 103 invalidates the first upper-limit bandwidth bound. When a higher injection bandwidth is not needed, the first node may invalidate the first upper-limit bandwidth bound and make the node enter a non-allocation mode to avoid wasting bandwidth resources.

In a possible implementation, the first expected bandwidth is a preset bandwidth value that matches a priority of the first node 103.

Different priorities of nodes are corresponding to different expected bandwidths. In principle, an expected bandwidth of a node with a higher priority is not lower than that of a node with a lower priority.

It should be noted that in this application, expected bandwidths of all nodes may be different, and upper-limit bandwidths of all the nodes are different. Different priorities of nodes are corresponding to different expected bandwidths and upper-limit bandwidths. In principle, an expected bandwidth and an upper-limit bandwidth of a node with a higher priority are not lower than those of a node with a lower priority. In this application, a corresponding priority may be set for each node in the ring network by using the module priority register 1009, a corresponding expected bandwidth is set based on the priority by using the expected bandwidth configuration register 10010, and based on the priority level, and a corresponding upper-limit bandwidth is set based on the priority by using the upper-limit bandwidth configuration register 10011. In this way, proper and efficient bandwidth allocation can be performed based on different nodes (such as nodes of different importance or nodes with different requirements for data packet processing amounts) and actual real-time changing injection bandwidth requirements.

It should be noted that in one ring network, a quantity of slots provided by the system is invariable within one time window. In other words, for the entire ring network, the total bandwidth is invariable. Therefore, an upper bandwidth limit of each node needs to be set based on the total bandwidth accordingly. A case that a sum of the upper bandwidth limits of the nodes is greater than the total bandwidth needs to be avoided; otherwise, a limitation function cannot be implemented.

In the embodiments of the present invention, different manners are used to cope with different bandwidth requirements of the module, and when the overall network load is unsaturated, a node with a high bandwidth requirement can obtain a required high bandwidth. In addition, an optimal configuration applicable to the chip or scenario can be provided based on data traffic characteristics of different types of chip or different use scenarios. This resolves the technical problems in this application.
(1) From a perspective of static allocation, various nodes have different bandwidth requirements. A node with a high bandwidth requirement needs to obtain a relatively high bandwidth, and a node with a low bandwidth requirement needs to obtain a relatively low bandwidth.
(2) From a perspective of dynamic allocation, a real-time network load status needs to be considered for bandwidth allocation and bandwidth adjustment is performed based on an actual traffic status of the network.

It should be noted that, the non-allocation mode and the restricted mode in the prior art can be applied flexibly in this application. This is not specifically limited in this application. For example, the non-allocation mode is used in some time periods or under some conditions, and the restricted mode is used in some time periods or under some conditions, and the allocation mode in the embodiments of this application can be used in some time periods or under some other conditions.

The foregoing are merely several embodiments of the present invention. A person skilled in the art can make various modifications or variations to the present invention based on disclosed content in this application file without departing from the scope of the present invention. For example, specific shapes or structures of the various components in the accompanying drawings of the embodiments of the present invention can be adjusted depending on actual application scenarios.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of the embodiments. In addition, functional units in the embodiments of this application may be integrated into one processing unit, or each of the units may exist alone physically, or at least two units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instruction is loaded and executed on a computer, the procedure or functions according to the embodiments of the present invention are completely or partially generated. The computer may be a general-purpose computer, a dedicated computer, a computer network, or another programmable apparatus. The computer instruction may be stored in a computer-readable storage medium, or may be transmitted by using the computer-readable storage medium. For example, the computer instruction may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a digital versatile disc (DVD)), a semiconductor medium (for example, a solid state disk (SSD)), or the like.

## Claims

1. An chip, comprising a plurality of functional modules (201-208) and a ring network, wherein the plurality of functional modules (201-208) perform data exchange through the ring network, the ring network comprises a plurality of nodes (101-108), and the plurality of functional modules (201-208) send and receive data in the ring network by using the plurality of nodes (101-108), wherein
the plurality of nodes (101-108) comprise a first node (103) and a second node (102), wherein the first node (103) and the second node (102) are adjacent in the ring network;
the first node (103) is adapted to determine whether a first injection buffer value is greater than a first threshold and whether a first injection bandwidth is less than a first expected bandwidth, wherein the first injection buffer value is a quantity of to-be-sent data packets of the first node (103), and the first injection bandwidth is a quantity of data packets successfully injected by the first node (103) into the ring network in which the first node (103) is located in one time window; and **characterized in that**
when the first injection buffer value is greater than the first threshold and the first injection bandwidth is less than the first expected bandwidth, the first node (103) is adapted to send a first request to the second node (102), wherein the first request is used to instruct at least one node in the ring network, other than the first node (103), to reduce a transmission quantity of first data packets, and the first data packet is a data packet that passes through the first node (103),
after receiving the first request, the second node (102) is adapted to determine whether a second injection bandwidth is greater than a second expected bandwidth, wherein the second injection bandwidth is a quantity of data packets successfully injected by the second node (102) into the ring network in one time window; and
if the second injection bandwidth is greater than the second expected bandwidth, the second node (102) is adapted to reduce the transmission quantity of first data packets.

2. The chip according to claim 1, wherein
if the second injection bandwidth is less than or equal to the second expected bandwidth, the second node (102) is adapted to forward the first request to a third node, making at least one node in the ring network, other than the first node (103) and the second node (102), reduce the transmission quantity of first data packets, wherein the third node is a node in the ring network adjacent to the second node (102).

3. The chip according to claim 1, wherein
the second node (102) is adapted to forward the first request to a third node, making at least one node in the ring network, other than the first node (103) and the second node (102), reduce the transmission quantity of first data packets, wherein the third node is a node in the ring network adjacent to the second node (102).

4. The chip according to any one of claims 1 to 3, wherein that the second node (102) is adapted to reduce the transmission quantity of first data packets comprises:
the second node (102) is adapted to validate a second upper-limit bandwidth bound, wherein the second upper-limit bandwidth bound is used to restrict the quantity of data packets successfully injected by the second node (102) into the ring network in one time window to a second upper-limit bandwidth, and the second upper-limit bandwidth is less than or equal to the second expected bandwidth.

5. The chip according to claim 1, wherein
the second node (102) is adapted to determine whether a pass bandwidth exceeds a second threshold, wherein the pass bandwidth is a quantity of data packets passing through the second node (102) in one time window; and
if the pass bandwidth exceeds the second threshold, the second node (102) is adapted to forward the first request to a third node, making at least one node in the ring network, other than the first node (103) and the second node (102), reduce the transmission quantity of first data packets, wherein the third node is a node in the ring network adjacent to the second node (102).

6. The chip according to any of claims 1 to 5, wherein
the first node (103) is adapted to validate a first upper-limit bandwidth bound, wherein the first upper-limit bandwidth bound is used to restrict the quantity of data packets successfully injected by the first node (103) into the ring network in one time window to a first upper-limit bandwidth, and the first upper-limit bandwidth is greater than or equal to the first expected bandwidth.

7. The chip according to claim 6, wherein that the first node (103) is adapted to validate a first upper-limit bandwidth bound comprises:
the first node (103) is adapted to replace an initial upper-limit bandwidth of the first node (103) with the first upper-limit bandwidth, and validate the first upper-limit bandwidth bound.

8. The chip according to any of claims 1 to 7, wherein
when the first node (103) determines that a time period in which the first injection buffer value is equal to zero exceeds a preset time period, or when the first node (103) determines that the first injection bandwidth is greater than the first expected bandwidth, the first node (103) is adapted to send a second request to the second node (102), wherein the second request is used to instruct at least one node in the ring network, other than the first node (103), to increase the transmission quantity of first data packets.

9. The chip according to any of claims 1 to 7, wherein
the first node (103) is adapted to determine that a time period in which the first injection buffer value is equal to zero exceeds a preset time period, or the first node (103) is adapted to determine that the first injection bandwidth is greater than the first expected bandwidth, and the first node (103) is adapted to invalidate the first upper-limit bandwidth bound.

10. The chip according to any of claims 1 to 9, wherein the ring network is a bufferless ring, BLR, network.

11. The chip according to any of claims 1 to 10, wherein the first expected bandwidth is a preset bandwidth value that matches a priority of the first node (103).

12. An electronic device, comprising:
the chip according to any one of claims 1 to 11 and a discrete device coupled to the chip.

## Patentansprüche

1. Chip, umfassend eine Vielzahl von Funktionsmodulen (201-208) und ein Ringnetzwerk, wobei die Vielzahl von Funktionsmodulen (201-208) einen Datenaustausch durch das Ringnetzwerk durchführen, wobei das Ringnetzwerk eine Vielzahl von Knoten (101-108) umfasst und die Vielzahl von Funktionsmodulen (201-208) Daten in dem Ringnetzwerk senden und empfangen, mittels Verwendens der Vielzahl von Knoten (101-108), wobei
die Vielzahl von Knoten (101-108) einen ersten Knoten (103) und einen zweiten Knoten (102) umfasst, wobei der erste Knoten (103) und der zweite Knoten (102) in dem Ringnetzwerk angrenzend sind;
der erste Knoten (103) angepasst ist, um zu bestimmen, ob ein erster Injektionspufferwert größer als ein erster Schwellenwert ist und ob eine erste Injektionsbandbreite kleiner als eine erste erwartete Bandbreite ist, wobei der erste Injektionspufferwert eine Menge von zu sendenden Datenpakete des ersten Knotens (103) ist, und die erste Injektionsbandbreite eine Menge von Datenpaketen ist, die mittels des ersten Knotens (103) in das Ringnetzwerk erfolgreich injiziert werden, wobei sich der erste Knoten (103) in einem gewissen Zeitfenster befindet; und **dadurch gekennzeichnet, dass**
wenn der erste Injektionspufferwert größer als der erste Schwellenwert ist und die erste Injektionsbandbreite kleiner als die erste erwartete Bandbreite ist, der erste Knoten (103) angepasst ist, um eine erste Anforderung an den zweiten Knoten (102) zu senden, wobei die erste Anforderung verwendet wird, um mindestens einen Knoten in dem Ringnetzwerk, außerdem ersten Knoten (103), anzuweisen, eine Übertragungsmenge von ersten Datenpaketen zu reduzieren, und das erste Datenpaket ein Datenpaket ist, das den ersten Knoten (103) durchläuft,
wobei nach Empfangen der ersten Anforderung, der zweite Knoten (102) angepasst ist, um zu bestimmen, ob eine zweite Injektionsbandbreite größer als eine zweite erwartete Bandbreite ist, wobei die zweite Injektionsbandbreite eine Menge von Datenpaketen ist, die mittels des zweiten Knotens (102) in das Ringnetzwerk in einem gewissen Zeitfenster erfolgreich injiziert werden; und
falls die zweite Injektionsbandbreite größer als die zweite erwartete Bandbreite ist, der zweite Knoten (102) angepasst ist, um die Übertragungsmenge von ersten Datenpaketen zu reduzieren.

2. Verfahren nach Anspruch 1, wobei
falls die zweite Injektionsbandbreite kleiner als oder gleich der zweiten erwarteten Bandbreite ist, der zweite Knoten (102) angepasst ist, um die erste Anforderung an einen dritten Knoten weiterzuleiten, der mindestens einen Knoten in dem Ringnetzwerk veranlasst, der ein anderer als der erste Knoten (103) und der zweiten Knoten (102) ist, die Übertragungsmenge von ersten Datenpaketen zu reduzieren, wobei der dritte Knoten ein Knoten in dem Ringnetzwerk angrenzend an den zweiten Knoten (102) ist.

3. Chip nach Anspruch 1, wobei
der zweite Knoten (102) angepasst ist, um die erste Anforderung an einen dritten Knoten weiterzuleiten, der mindestens einen Knoten in dem Ringnetzwerk veranlasst, der ein anderer als der erste Knoten (103) und der zweiten Knoten (102) ist, die Übertragungsmenge von ersten Datenpaketen zu reduzieren, wobei der dritte Knoten ein Knoten in dem Ringnetzwerk angrenzend an den zweiten Knoten (102) ist.

4. Chip nach einem der Ansprüche 1 bis 3, wobei der zweite Knoten (102) angepasst ist, um die Übertragungsmenge von ersten Datenpaketen zu reduzieren, Folgendes umfasst:
der zweite Knoten (102) angepasst ist, um eine zweite obergrenzige Bandbreitenbeschränkung zu validieren, wobei die zweite obergrenzige Bandbreitenbeschränkung verwendet wird, um die Menge von Datenpaketen, die mittels des zweiten Knotens (102) in das Ringnetzwerk in einem gewissen Zeitfenster erfolgreich injiziert werden, auf eine zweite obergrenzige Bandbreite zu limitieren, und die zweite obergrenzige Bandbreite kleiner als oder gleich der zweiten erwarteten Bandbreite ist.

5. Chip nach Anspruch 1, wobei
der zweite Knoten (102) angepasst ist, um zu bestimmen, ob eine Durchlaufbandbreite einen zweiten Schwellenwert überschreitet, wobei die Durchlaufbandbreite eine Menge von Datenpaketen ist, die in einem gewissen Zeitfenster durch den zweiten Knoten (102) laufen; und
falls die Durchlaufbandbreite den zweiten Schwellenwert überschreitet, der zweite Knoten (102) angepasst ist, um die erste Anforderung an einen dritten Knoten weiterzuleiten, der mindestens einen Knoten in dem Ringnetzwerk veranlasst, der ein anderer als der erste Knoten (103) und der zweiten Knoten (102) ist, die Übertragungsmenge von ersten Datenpaketen zu reduzieren, wobei der dritte Knoten ein Knoten in dem Ringnetzwerk angrenzend an den zweiten Knoten (102) ist.

6. Chip nach einem der Ansprüche 1 bis 5, wobei,
der erste Knoten (103) angepasst ist, um eine erste obergrenzige Bandbreitenbeschränkung zu validieren, wobei die erste obergrenzige Bandbreitenbeschränkung verwendet wird, um die Menge von Datenpaketen, die mittels des ersten Knotens (103) in das Ringnetzwerk in einem gewissen Zeitfenster erfolgreich injiziert werden, auf eine erste obergrenzige Bandbreite zu limitieren, und die erste obergrenzige Bandbreite größer als oder gleich der ersten erwarteten Bandbreite ist.

7. Chip nach Anspruch 6, wobei dass der erste Knoten (103) angepasst ist, um eine erste obergrenzige Bandbreitenbeschränkung zu validieren, Folgendes umfasst:
der erste Knoten (103) angepasst ist, um eine anfängliche obergrenzige Bandbreite des ersten Knotens (103) mit der ersten obergrenzigen Bandbreite zu ersetzen, und die erste obergrenzige Bandbreitenbeschränkung zu validieren.

8. Chip nach einem der Ansprüche 1 bis 7, wobei,
wenn der erste Knoten (103) bestimmt, dass eine Zeitperiode, in der der erste Injektionspufferwert gleich Null ist, eine voreingestellten Zeitperiode überschreitet, oder wenn der erste Knoten (103) bestimmt, dass die erste Injektionsbandbreite größer als die erste erwartete Bandbreite ist, der erste Knoten (103) angepasst ist, um eine zweite Anforderung an den zweiten Knoten (102) zu senden, wobei die zweite Anforderung verwendet wird, um mindestens einen Knoten in dem Ringnetzwerk, außer dem ersten Knoten (103), anzuweisen, die Übertragungsmenge von ersten Datenpaketen zu erhöhen.

9. Chip nach einem der Ansprüche 1 bis 7, wobei,
der erste Knoten (103) angepasst ist, um zu bestimmen, dass eine Zeitperiode, in der der erste Injektionspufferwert gleich Null ist, eine voreingestellte Zeitperiode überschreitet, oder der erste Knoten (103) angepasst ist, um zu bestimmen, dass die erste Injektionsbandbreite größer als die erste erwartete Bandbreite ist, und der erste Knoten (103) angepasst ist, um die erste obergrenzige Bandbreitenbeschränkung ungültig zu machen.

10. Chip nach einem der Ansprüche 1 bis 9, wobei das Ringnetzwerk ein pufferloses Ring(bufferless ring - BLR)-Netzwerk ist.

11. Chip nach einem der Ansprüche 1 bis 10, wobei die erste erwartete Bandbreite ein voreingestellter Bandbreitenwert ist, der mit einer Priorität des ersten Knotens (103) übereinstimmt.

12. Elektronische Vorrichtung, umfassend:
den Chip nach einem der Ansprüche 1 bis 11 und eine diskrete Vorrichtung, die mit dem Chip gekoppelt ist.

## Revendications

1. Puce, comprenant une pluralité de modules fonctionnels (201-208) et un réseau en anneau, la pluralité de modules fonctionnels (201-208) réalisant un échange de données à travers le réseau en anneau, le réseau en anneau comprenant une pluralité de noeuds (101-108), et la pluralité de modules fonctionnels (201-208) envoyant et recevant des données dans le réseau en anneau à l'aide de la pluralité de noeuds (101-108),
la pluralité de noeuds (101-108) comprenant un premier noeud (103) et un deuxième noeud (102), le premier noeud (103) et le deuxième noeud (102) étant adjacents dans le réseau en anneau ;
le premier noeud (103) étant adapté pour déterminer si une première valeur de tampon d'injection est supérieure à un premier seuil et si une première largeur de bande d'injection est inférieure à une première largeur de bande attendue, la première valeur de tampon d'injection étant une quantité de paquets de données à envoyer du premier noeud (103), et la première largeur de bande d'injection étant une quantité de paquets de données injectés avec succès par le premier noeud (103) dans le réseau en anneau dans lequel le premier noeud (103) est situé dans une fenêtre temporelle ; et **caractérisé en ce que**
lorsque la première valeur de tampon d'injection est supérieure au premier seuil et que la première largeur de bande d'injection est inférieure à la première largeur de bande attendue, le premier noeud (103) est adapté pour envoyer une première demande au deuxième noeud (102), la première demande étant utilisée pour donner instruction à au moins un noeud dans le réseau en anneau, autre que le premier noeud (103), de réduire une quantité de transmission de premiers paquets de données, et le premier paquet de données étant un paquet de données qui passe par le premier noeud (103),
après la réception de la première demande, le deuxième noeud (102) étant adapté pour déterminer si une seconde largeur de bande d'injection est supérieure à une seconde largeur de bande attendue, la seconde largeur de bande d'injection étant une quantité de paquets de données injectés avec succès par le deuxième noeud (102) dans le réseau en anneau dans une fenêtre temporelle ; et
si la seconde largeur de bande d'injection est supérieure à la seconde largeur de bande attendue, le deuxième noeud (102) étant adapté pour réduire la quantité de transmission des premiers paquets de données.

2. Puce selon la revendication 1,
si la seconde largeur de bande d'injection est inférieure ou égale à la seconde largeur de bande attendue, le deuxième noeud (102) étant adapté pour transférer la première demande à un troisième noeud, créant au moins un noeud dans le réseau en anneau, autre que le premier noeud (103) et le deuxième noeud (102), réduisant la quantité de transmission des premiers paquets de données, le troisième noeud étant un noeud dans le réseau en anneau à proximité du deuxième noeud (102).

3. Puce selon la revendication 1,
le deuxième noeud (102) étant adapté pour transférer la première demande à un troisième noeud, créant au moins un noeud dans le réseau en anneau, autre que le premier noeud (103) et le deuxième noeud (102), réduisant la quantité de transmission des premiers paquets de données, le troisième noeud étant un noeud dans le réseau en anneau à proximité du deuxième noeud (102).

4. Puce selon l'une quelconque des revendications 1 à 3, le fait que le deuxième noeud (102) est adapté pour réduire la quantité de transmission des premiers paquets de données comprenant :
le deuxième noeud (102) étant adapté pour valider une seconde borne de largeur de bande de limite supérieure, la seconde borne de largeur de bande de limite supérieure étant utilisée pour restreindre la quantité de paquets de données injectés avec succès par le deuxième noeud (102) dans le réseau en anneau dans un fenêtre temporelle sur une seconde largeur de bande de limite supérieure, et la seconde largeur de bande de limite supérieure étant inférieure ou égale à la seconde largeur de bande attendue.

5. Procédé selon la revendication 1,
le deuxième noeud (102) étant adapté pour déterminer si une largeur de bande passante dépasse un second seuil, la largeur de bande passante étant une quantité de paquets de données passant par le deuxième noeud (102) dans une fenêtre temporelle ; et
si la largeur de bande passante dépasse le second seuil, le deuxième noeud (102) étant adapté pour transférer la première demande à un troisième noeud, créant au moins un noeud dans le réseau en anneau, autre que le premier noeud (103) et le deuxième noeud (102), réduisant la quantité de transmission des premiers paquets de données, le troisième noeud étant un noeud dans le réseau en anneau à proximité du deuxième noeud (102).

6. Puce selon l'une quelconque des revendications 1 à 5,
le premier noeud (103) étant adapté pour valider une première borne de largeur de bande de limite supérieure, la première borne de largeur de bande de limite supérieure étant utilisée pour restreindre la quantité de paquets de données injectés avec succès par le premier noeud (103) dans le réseau en anneau dans une fenêtre temporelle sur une première largeur de bande de limite supérieure, et la première largeur de bande de limite supérieure étant supérieure ou égale à la première largeur de bande attendue.

7. Puce selon la revendication 6, le fait que le premier noeud (103) est adapté pour valider une première borne de largeur de bande de limite supérieure comprenant :
le premier noeud (103) étant adapté pour remplacer une largeur de bande de limite supérieure initiale du premier noeud (103) par la première largeur de bande de limite supérieure, et valider la première borne de largeur de bande de limite supérieure.

8. Puce selon l'une quelconque des revendications 1 à 7,
lorsque le premier noeud (103) détermine qu'une période de temps dans laquelle la première valeur de tampon d'injection est égale à zéro dépasse une période de temps prédéfinie, ou lorsque le premier noeud (103) détermine que la première largeur de bande d'injection est supérieure à la première largeur de bande attendue, le premier noeud (103) étant adapté pour envoyer une seconde demande au deuxième noeud (102), la seconde demande étant utilisée pour donner instruction à au moins un noeud du réseau en anneau, autre que le premier noeud (103), d'augmenter la quantité de transmission des premiers paquets de données.

9. Puce selon l'une quelconque des revendications 1 à 7,
le premier noeud (103) étant adapté pour déterminer qu'une période de temps dans laquelle la première valeur de tampon d'injection est égale à zéro dépasse une période de temps prédéfinie, ou le premier noeud (103) étant adapté pour déterminer que la première largeur de bande d'injection est supérieure à la première largeur de bande attendue, et le premier noeud (103) étant adapté pour invalider la première borne de largeur de bande de limite supérieure.

10. Puce selon l'une quelconque des revendications 1 à 9, le réseau en anneau étant un réseau en anneau sans tampon, BLR.

11. Puce selon l'une quelconque des revendications 1 à 10, la première largeur de bande attendue étant une valeur de largeur de bande prédéfinie qui correspond à une priorité du premier noeud (103).

12. Dispositif électronique, comprenant :
la puce selon l'une quelconque des revendications 1 à 11 et un dispositif discret couplé à la puce.
